# FASCICULE DE BREVET EUROPEEN

(11) **EP 1 555 463 B1**
(45) Date de publication et mention de la délivrance du brevet: **20.09.2006**
(21) Numéro de dépôt: 05290045.3
(22) Date de dépôt: 07.01.2005
(51) Int. Cl.: F16H 61/32, H02K 41/035

(54) **Dispositif de commande d'une boîte de vitesses, en particulier pour véhicule automobile**
Getriebesteuerungseinrichtung, insbesondere für Fahrzeuge
Control device of a transmission, especially for vehicles

(30) Priorité: 15.01.2004 FR 0400372
(43) Date de publication de la demande: 20.07.2005
(73) Titulaire: Teleflex Automotive France SA, 74300 Cluses (FR)
(72) Inventeur: Baz, Jean-Pierre, 74190 Passy (FR); Guimet, Daniel, 74300 Thyez (FR); Florens, Jean-Loup, 38031 Grenoble Cedex (FR)
(74) Mandataire: Ramey, Daniel

(56) Documents cités:
- DE-A- 10 316 421
- FR-A- 2 839 132
- FR-A- 2 839 216
- US-A- 5 424 591
- US-A- 6 157 099
- US-A1- 2003 230 158
- PATENT ABSTRACTS OF JAPAN vol. 0082, no. 31 (E-274), 24 octobre 1984 (1984-10-24) & JP 59 113762 A (MATSUSHITA DENKI SANGYO KK), 30 juin 1984 (1984-06-30)

## Description

La présente invention concerne un dispositif de commande d'une boîte de vitesses automatique, en particulier pour véhicule automobile, comprenant des moyens d'actionnement d'au moins un axe de sélection monté à rotation dans la boîte de vitesses.

Le document FR-A- 2 839 216 montre un dispositif de commande comprenant toutes les caractéristiques du préambule de la revendication indépendante 1.

Dans la technique traditionnelle, le levier de sélection est relié à la boîte de vitesses par un système de câbles ou par une tringlerie, dont les inconvénients sont bien connus.

On a déjà proposé de remplacer ce système de câbles ou cette tringlerie par un motoréducteur électrique associé à un levier de sélection qui commande des microcommutateurs quand il est amené dans ses diverses positions. Toutefois, les motoréducteurs électriques ont l'inconvénient d'avoir un temps de réponse relativement long (typiquement de l'ordre de 400 à 700ms) et d'être irréversibles, ce qui impose une grande précision de leur commande, l'axe de sélection de la boîte de vitesses devant être entraîné par le motoréducteur pour être placé exactement dans ses positions prédéterminées de sélection.

La présente invention a notamment pour objet un dispositif de commande d'une boîte de vitesses qui ne présente pas les inconvénients des dispositifs connus.

Elle propose à cet effet un dispositif de commande d'une boîte de vitesses automatique, en particulier pour véhicule automobile, comprenant des moyens d'actionnement d'au moins un axe de sélection monté à rotation dans la boîte de vitesses, caractérisé en ce que les moyens d'actionnement sont formés par un actionneur électrique plat comprenant une bobine plate montée à rotation autour d'un axe fixe entre deux aimants permanents plats portés par une culasse, des moyens de liaison reliant la bobine à l'axe de sélection de la boîte de vitesses, et des moyens d'alimentation électrique de la bobine, propres à faire à faire passer un courant électrique dans un sens ou dans l'autre dans la bobine pour la faire tourner dans un sens ou dans l'autre autour de l'axe fixe précité.

Le dispositif selon l'invention diminue considérablement les frottements et les risques de blocage car il ne comprend ni engrenages ni câbles coulissants ni tringlerie. De plus il est réversible, ce qui permet de commander l'actionneur avec une précision relative car il n'est plus nécessaire d'amener exactement l'axe de sélection dans une position prédéterminée. Il suffit d'amener cet axe au voisinage de sa position prédéterminée, après quoi des moyens de positionnement angulaire tels que des moyens de billage ou analogues associés à l'axe de sélection agissent sur cet axe et l'amènent dans sa position exacte de sélection, la réversibilité de l'entraînement par l'actionneur autorisant ce déplacement sans le contrarier.

En outre, le temps de réponse d'un tel dispositif de commande est faible, typiquement de l'ordre de 70ms.

Selon une autre caractéristique de l'invention, le dispositif comprend des moyens de commande de l'alimentation électrique de la bobine, pour faire passer dans la bobine un courant électrique dans un sens déterminé pendant une durée déterminée en fonction de signaux électriques générés par des moyens de commande pilotés par des moyens de commutation associés au levier de sélection de vitesses.

La commande des moyens d'alimentation électrique de la bobine peut ainsi être réalisée de façon particulièrement simple et fiable.

Selon une autre caractéristique de l'invention, le dispositif comprend un capteur de position ou de déplacement associé à la bobine et fournissant un signal correspondant au déplacement angulaire de la bobine autour de l'axe fixe précité, ce capteur étant monté dans une boucle de réaction des moyens de commande de l'alimentation électrique de la bobine.

On réalise ainsi, de façon simple et précise, un asservissement du déplacement de la bobine entre les différentes positions de sélection de vitesses.

Avantageusement, le capteur est du type sans contact, tel par exemple qu'un capteur à magnétorésistances.

Un tel capteur est insensible aux variations de température des aimant permanents et présente une bonne tenue aux vibrations. De plus, il fournit un signal proportionnel au déplacement angulaire de la bobine autour de son axe de rotation.

Dans un mode de réalisation de l'invention, la bobine est montée directement sur l'axe de sélection de la boîte de vitesses, qui forme l'axe de rotation de la bobine.

Dans une variante de réalisation de l'invention, la bobine est reliée à l'axe de sélection de la boîte de vitesses par au moins un levier comprenant des moyens de réglage de longueur.

Les moyens de réglage permettent de prépositionner angulairement la bobine plate avec précision, en compensant et en rattrapant les dispersions de cotes et les tolérances dimensionnelles.

Ces deux modes de réalisation permettent d'utiliser le dispositif selon l'invention dans tout type de véhicule moyennant une adaptation de la liaison de la bobine à l'axe de sélection de la boîte de vitesses.

Avantageusement, les moyens d'alimentation électrique de la bobine comprennent un convertisseur à courant continu ou convertisseur DC-DC selon la terminologie utilisée en général.

Cela permet de réduire les intensités de fonctionnement, de simplifier la commande de l'alimentation électrique de la bobine, de diminuer les pertes par effet Joule et donc d'améliorer le rendement du dispositif, et de diminuer le champ magnétique de réaction de la bobine.

Selon une autre caractéristique de l'invention, l'axe de sélection de la boîte de vitesses est associé à un moyen de positionnement angulaire tel qu'une lame élastique de billage assurant un positionnement précis de cet axe dans chacune de ses positions angulaires prédéterminées de sélection de vitesse.

Dans un mode de réalisation de l'invention, les aimants permanents des moyens d'actionnements sont des aimants néodyme fer bore.

L'utilisation d'aimants néodyme fer bore garantit le fonctionnement en température et la tenue à la désaimantation.

Dans une variante de réalisation de l'invention, les aimants permanents des moyens d'actionnement sont des aimants samarium cobalt.

D'autres avantages et caractéristiques de l'invention apparaîtront à la lecture de la description suivante faite à titre d'exemple non limitatif et en référence aux dessins annexés dans lesquels :
- la figure 1 représente schématiquement un dispositif de commande d'une boîte de vitesses selon l'invention ;
- la figure 2 représente schématiquement le circuit de commande du dispositif de la figure 1 ;
- la figure 3 est une vue schématique en perspective éclatée de l'actionneur ;
- les figures 4 et 5 représentent deux variantes de liaison de l'actionneur et de l'axe de sélection de la boîte de vitesses ;
- la figure 6 est une vue schématique d'un capteur à magnétorésistance utilisé dans le dispositif selon l'invention.

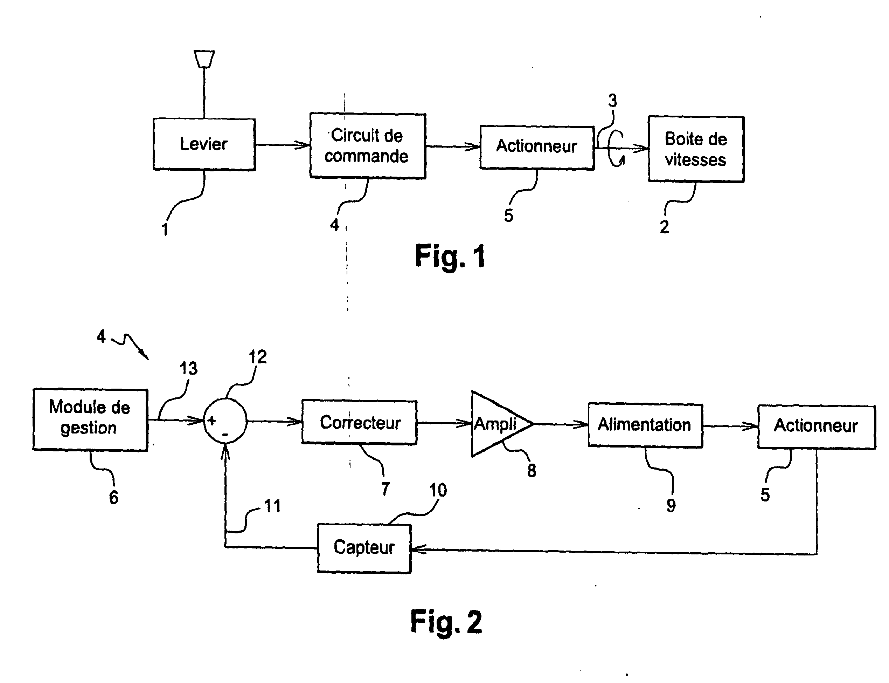

En figure 1, la référence 1 désigne des moyens de sélection de vitesse tels notamment qu'un levier destiné à entraîner en rotation un axe de sélection 3 d'une boîte de vitesses automatique 2 d'un véhicule automobile.

Le levier de sélection 1 est actionné par le conducteur du véhicule et déplacé dans une grille à plusieurs positions prédéterminées du type P-R-N-D par exemple, la disposition du levier dans l'une de ces positions actionnant un commutateur dont le signal de sortie est transmis à un circuit de commande 4.

Le circuit de commande 4 génère un signal de commande d'un actionneur 5 qui entraîne en rotation l'axe de sélection 3 dans un sens ou dans l'autre, pour l'amener dans une position prédéterminée correspondant à celle du levier 1.

Le circuit de commande 4, représenté plus en détail en figure 2, comprend un module de gestion 6 commandé par le calculateur du véhicule et générant un signal de consigne appliqué par un correcteur 7 et par un amplificateur 8 à des moyens 9 d'alimentation électrique de l'actionneur 5.

Un capteur de position ou de déplacement 10 est associé à la sortie de l'actionneur 5 et génère un signal électrique 11 appliqué à une entrée d'un comparateur 12 dont une autre entrée reçoit le signal de consigne 13 fourni par le module de gestion 6. La sortie du comparateur 12 représente la différence des signaux 11 et 13 et est appliquée par le correcteur 7 et l'amplificateur 8 aux moyens 9 qui génèrent un courant électrique dont l'intensité, la polarité et la durée sont déterminées.

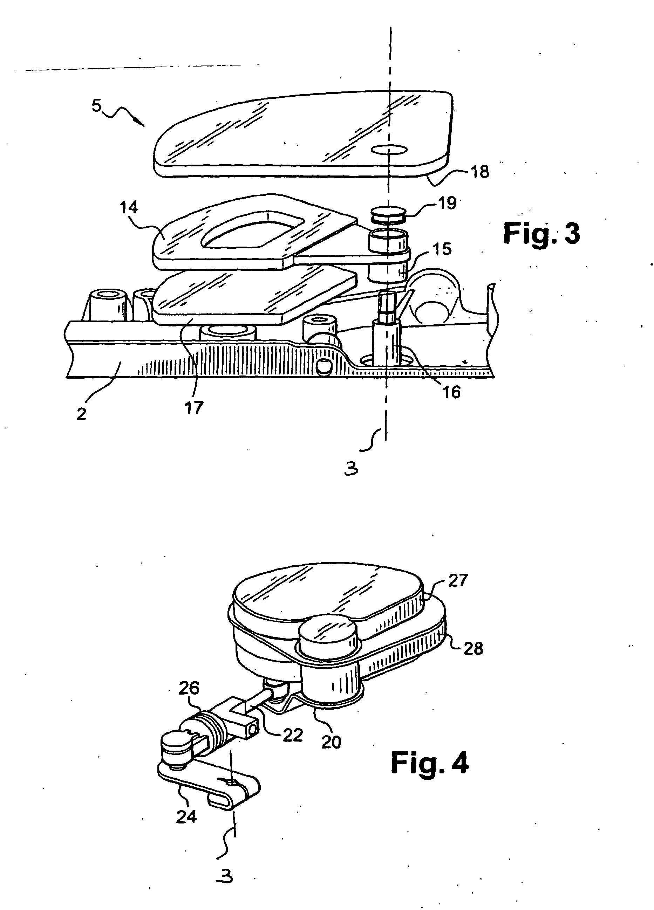

L'actionneur 5 est un moteur électrique plat et dans un mode de réalisation représenté en figure 3 comprend une bobine plate 14 en forme de secteur angulaire montée à rotation, au moyen d'une douille 15, autour d'un axe fixe 16.

Les actionneurs électriques plats de ce type sont connus, notamment par le brevet français n° 2 638 273 qui décrit un moteur électrique plat composé d'une juxtaposition de bobines plates montées coulissantes sur des glissières et séparées par des aimants permanents. L'alimentation en courant électrique des bobines induit un champ magnétique qui s'oppose à la polarisation des aimants permanents et crée un déplacement latéral des bobines le long de leurs glissières.

La bobine plate 14 de l'actionneur du dispositif selon l'invention est déplaçable en rotation entre deux aimants permanents plats 17 et 18 fixes et portés par une culasse (non représentée) de fermeture du champ magnétique. Les aimants permanents plats 17 et 18 sont de préférence des aimants néodyme fer bore ou des aimants samarium cobalt.

Dans un exemple de réalisation, la bobine plate 14 s'étend angulairement sur 45° environ et comprend de 90 à 120 spires de fil de cuivre d'un diamètre de 1 mm environ. La résistance électrique de cette bobine est comprise entre 0,3 et 0,9 ohms environ à 25°C. Son inductance est comprise entre 0,3 et 0,9 mH. L'épaisseur des enroulements de fil de cuivre est d'environ 8 mm.

Les aimants plats 17,18 s'étendent angulairement chacun sur 90° environ. Ils génèrent un champ magnétique d'environ 1,1 à 1,2 T et ont une tenue au champ coercitif (désaimantation) d'environ 900 à 2000 KA/ m. Leur épaisseur est de l'ordre de 5 à 10 mm.

On peut utiliser à la place de chaque aimant 17, 18 s'étendant sur 90°, deux aimants sensiblement juxtaposés s'étendant chacun sur 45°.

En fonction des signaux électriques générés par les moyens de sélection de vitesse 1, les moyens d'alimentation électrique 9 font passer dans la bobine 14 un courant électrique de durée déterminée dans un sens déterminé. Les moyens d'alimentation électrique 9 de l'actionneur 5 comprennent préférentiellement un convertisseur à courant continu ou convertisseur DC-DC afin de diminuer notamment les intensités de fonctionnement, le temps de réponse de l'actionneur et les pertes par effet joule.

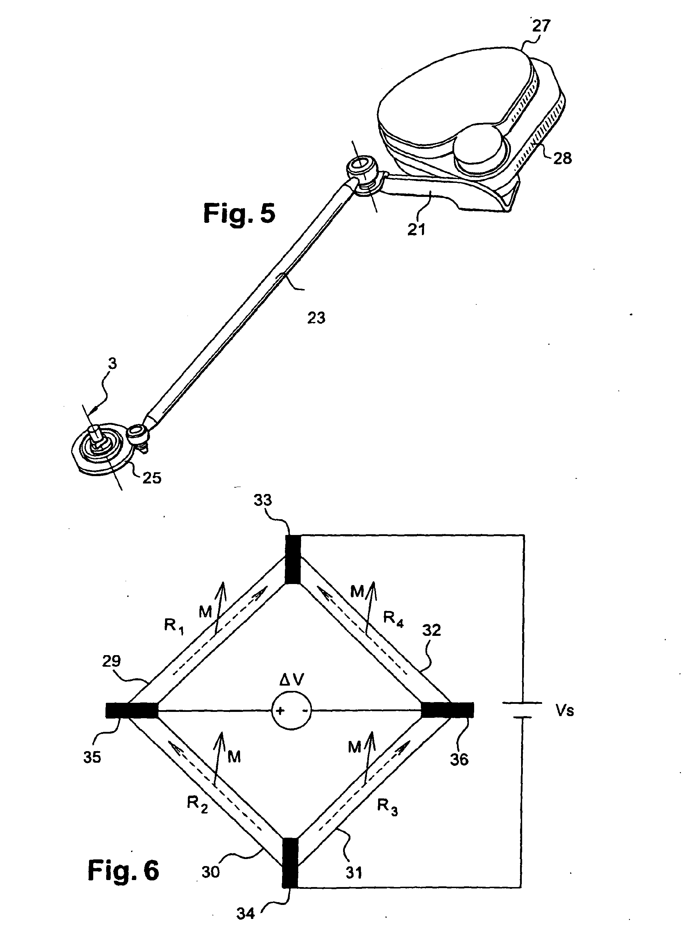

Les déplacements angulaires de la bobine 14 sont détectés par un capteur 19 de position ou de déplacement porté par la douille 15 et tournant par rapport à l'aimant permanent 18 pour fournir un signal correspondant à une rotation de la bobine 14 autour de l'axe fixe 16. Le capteur 19 est du type sans contact tel par exemple qu'un capteur à magnétorésistances, dont la structure est décrite plus en détail dans ce qui suit en référence à la figure 6.

La douille 15 de la bobine 14 peut être reliée à l'axe de sélection 3 de la boîte de vitesses de différentes façons.

En figure 3, la douille 15 de la bobine 12 est directement montée sur l'axe de sélection 3 de la boîte de vitesses 2. Cette réalisation a l'avantage de la simplicité.

Dans les figures 4 et 5, les moyens de liaison comprennent un levier 20 ou 21 solidaire en rotation de la douille 15 de la bobine et relié à son autre extrémité par une biellette 22 ou 23 à un autre levier 24 ou 25 dont l'autre extrémité est solidaire en rotation de l'axe de sélection de la boîte de vitesses.

En figure 4, la biellette 22 comprend des moyens 26 de réglage de longueur, qui permettent d'ajuster la position angulaire de la bobine 14 par rapport à une position déterminée de l'axe de sélection 3 en compensant les dispersions de cotes et les tolérances dimensionnelles. Les moyens de réglage 26 sont d'un type quelconque approprié et comprennent par exemple un écrou vissé sur un tige filetée et des moyens de blocage de l'écrou en rotation. La compensation par les moyens 26 est par exemple de l'ordre de 10 mm en longueur et correspond à un écart angulaire de plus ou moins 0,7° au niveau de l'actionneur.

L'axe de sélection 3 de la boîte de vitesses 2 est de préférence associé à une lame de billage qui assure un positionnement précis de cet axe dans l'une quelconque des positions angulaires P-R-N-D prédéterminées dès que l'axe 3 est au voisinage de cette position.

Ainsi, dans le cas où pour une raison quelconque, l'actionneur n'amène pas l'axe 3 dans sa position prédéterminée, mais l'amène dans une position voisine, la lame de billage finit de positionner l'axe 3. Il en résulte une grande sûreté de la commande.

L'actionneur des figures 4 et 5 est logé dans un boîtier protecteur formé par l'assemblage de deux carters 27, 28 pouvant servir de culasse de montage des aimants permanents 17, 18 précités.

En figure 6, on a représenté schématiquement un capteur à magnétorésistances qui comprend quatre éléments sensibles 29 à 32 en matériau ferreux par exemple, montés en pont de Wheastone dont deux bornes opposées 33, 34 sont reliées à une source d'alimentation électrique Vs et dont les deux autres bornes 35, 36 forment les bornes de sortie du capteur, entre lesquelles est générée une tension de sortie ΔV. En figure 1, cette tension de sortie ΔV est appliquée à une entrée du comparateur 12. Les résistances électriques R1, R2, R3, R4 des éléments sensibles 29 à 32 varient en fonction de l'angle entre d'une part l'aimantation produite dans les éléments sensibles 29 à 32 par une induction magnétique M générée par l'aimant permanent 18 de la figure 3 et d'autre part le sens du passage du courant électrique dans les éléments sensibles 29 à 32. Quand l'induction magnétique M est supérieure à une certaine valeur, les éléments sensibles 29 à 32 sont saturés magnétiquement et leurs résistances R1, R2, R3, R4 varient en fonction du carré du cosinus de l'angle entre l'induction magnétique M et le sens de passage du courant électrique dans les éléments 29 à 32.

De façon générale, l'invention s'applique également à la commande d'une boîte de vitesses comprenant un axe de sélection et d'engagement, le dispositif comprenant alors deux actionneurs du type précité pour les déplacements de l'axe en translation et en rotation.

## Revendications

1. Dispositif de commande d'une boîte de vitesses automatique (2), en particulier pour véhicule automobile, comprenant des moyens d'actionnement d'au moins un axe de sélection (3) monté à rotation dans la boîte de vitesses (2), **caractérisé en ce que** les moyens d'actionnement en rotation de l'axe de sélection (3) sont formés par un actionneur électrique plat (5) comprenant une bobine plate (14) montée à rotation autour d'un axe fixe (16) entre deux aimants permanents plats (17, 18) portés par une culasse, des moyens de liaison (15, 20 à 25) reliant la bobine (14) à l'axe de sélection (3) de la boîte de vitesses (2), et des moyens (9) d'alimentation électrique de la bobine (14), propres à faire passer un courant électrique dans un sens ou dans l'autre dans la bobine (14) pour la faire tourner dans un sens ou dans l'autre autour de l'axe fixe (16) précité.

2. Dispositif selon la revendication 1, **caractérisé en ce qu**'il comprend des moyens (4) de commande de l'alimentation électrique de la bobine (14), pour faire passer dans la bobine (14) un courant électrique dans un sens déterminé pendant une durée déterminée en fonction de signaux électriques générés par des moyens (1) de sélection de vitesse.

3. Dispositif selon la revendication 2, **caractérisé en ce qu**'il comprend un capteur (19) de position ou de déplacement associé à la bobine (14) et fournissant un signal correspondant à un déplacement angulaire de la bobine (14) autour de l'axe fixe (16) précité, ce capteur (19) étant monté dans une boucle de réaction des moyens (4) de commande de l'alimentation électrique de la bobine (14).

4. Dispositif selon la revendication 3, **caractérisé en ce que** le capteur (19) est du type sans contact, tel par exemple qu'un capteur à magnétorésistances (29 à 32).

5. Dispositif selon l'une des revendications précédentes, **caractérisé en ce que** la bobine (14) est montée sur l'axe de sélection (3) de la boîte de vitesses (2), qui forme l'axe de rotation de la bobine (14).

6. Dispositif selon l'une des revendications 1 à 4, **caractérisé en ce que** la bobine (14) est reliée à l'axe de sélection (3) de la boîte de vitesses (2) par au moins une biellette (22, 23) comprenant par exemple des moyens de réglage (26) de longueur.

7. Dispositif selon l'une des revendications précédentes, **caractérisé en ce que** les moyens d'alimentation électrique (9) de la bobine (14) comprennent un convertisseur DC-DC.

8. Dispositif selon l'une des revendications précédentes, **caractérisé en ce qu**'il est réversible et en ce que l'axe de sélection (3) de la boîte de vitesses (2) est associé à un moyen de positionnement angulaire tel qu'une lame élastique de billage assurant un positionnement de cet axe (3) dans l'une quelconque de plusieurs positions angulaires prédéterminées.

9. Dispositif selon l'une des revendications précédentes, **caractérisé en ce que** les aimants permanents (17, 18) des moyens d'actionnement sont des aimants néodyme fer bore.

10. Dispositif selon l'une des revendications précédentes, **caractérisé en ce que** les aimants permanents (17, 18) des moyens d'actionnement sont des aimants samarium cobalt.

## Claims

1. A device for controlling an automatic gearbox (2), in particular for a motor vehicle, including means for actuating at least one selector shaft (3) pivotally mounted in the gearbox (2), **characterized in that** the means for actuating in rotation the selector shaft (3) are formed by a flat electrical actuator (5) comprising a flat coil (14) mounted to pivot about a stationary pin (16) between two flat permanent magnets (17, 18) carried by a yoke, connection means (15, 20 to 25) connecting the coil (14) to the selector shaft (3) of the gearbox (2), and means (9) for electrically powering the coil (14), suitable for causing an electric current to pass in one direction or the other through the coil (14) to cause it to turn in one direction or the other about the above-mentioned stationary pin (16).

2. A device according to claim 1, **characterized in that** it includes means (4) for controlling the electrical power supply to the coil (14) so as to cause an electric current to pass through the coil (14) in a determined direction for a determined duration as a function of electrical signals generated by the speed selector means (1).

3. A device according to claim 2, **characterized in that** it includes a position or displacement sensor (19) associated with the coil (14) and supplying a signal corresponding to an angular displacement of the coil (14) about the above-mentioned stationary pin (16), said sensor (19) being mounted in a feedback loop of the means (4) for controlling electrical power supply to the coil (14) .

4. A device according to claim 3, **characterized in that** the sensor (19) is of the contactless type, such as a magnetoresistance sensor (29 to 32), for example.

5. A device according to any preceding claim, **characterized in that** the coil (14) is mounted on the selector shaft (3) of the gearbox (2), which forms the pivot axis of the coil (14).

6. A device according to any one of claims 1 to 4, **characterized in that** the coil (14) is connected to the selector shaft (3) of the gearbox (2) via at least one link (22, 23), e.g. including means (26) for adjusting its length.

7. A device according to any preceding claim, **characterized in that** the means (9) for electrically powering the coil (14) comprise a DC-DC converter.

8. A device according to any preceding claim, **characterized in that** it is reversible, and **in that** the selector shaft (3) of the gearbox (2) is associated with a resilient positioning means for ensuring that said shaft (3) is positioned in any one of a plurality of predetermined angular positions.

9. A device according to any preceding claim, **characterized in that** the permanent magnets (17, 18) of the actuator means are neodymium iron boron magnets.

10. A device according to any preceding claim, **characterized in that** the permanent magnets (17, 18) of the actuator means are samarium cobalt magnets.

## Patentansprüche

1. Steuerungseinrichtung für ein Automatikgetriebe (2), insbesondere für ein Kraftfahrzeug, umfassend Betätigungsmittel mindestens einer Auswahlachse (3), die drehbar im Getriebe (2) angebracht ist, **dadurch gekennzeichnet, dass** die Betätigungsmittel zur Rotation der Auswahlachse (3) durch einen flachen Elektroantrieb (5) gebildet sind, der eine flache Spule (14) umfasst, die drehbar um eine feste Achse (16) zwischen zwei flachen Permanentmagneten (17, 18) angebracht ist, die von einem Joch getragen sind, wobei Verbindungsmittel (15, 20 bis 25) die Spule (14) mit der Auswahlachse (3) des Getriebes (2) verbinden, und Mittel (9) zur elektrischen Stromversorgung der Spule (14), die gegeignet sind, einen elektrischen Strom in der einen oder anderen Richtung in der Spule (14) fließen zu lassen, damit sie sich in der einen oder anderen Richtung um die genannte feste Achse (16) dreht.

2. Einrichtung nach Anspruch 1, **dadurch gekennzeichnet, dass** sie Steuerungsmittel (4) für die elektrische Stromversorgung der Spule (14) umfasst, um in der Spule (14) einen elektrischen Strom in einer bestimmten Richtung während einer bestimmten Dauer in Funktion von elektrischen Signalen, die von Schaltwahlmitteln (1) erzeugt sind, fließen zu lassen.

3. Einrichtung nach Anspruch 2, **dadurch gekennzeichnet, dass** sie einen Sensor (19) für die Position oder Verschiebung der Spule (14) umfasst und ein Signal gibt, das einer Winkelverschiebung der Spule (14) um die genannte feste Achse (16) entspricht, wobei dieser Sensor (19) in einer Reaktionsschleife der Steuermittel (4) für die elektrische Stromversorgung der Spule (14) angebracht ist.

4. Einrichtung nach Anspruch 3, **dadurch gekennzeichnet, dass** der Sensor (19) vom kontaktlosen Typ ist, wie zum Beispiel ein Magnetwiderstandssensor (29 bis 32).

5. Einrichtung nach einem der vorhergehenden Ansprüche, **dadurch gekennzeichnet, dass** die Spule (14) auf der Auswahlachse (3) des Getriebes (2) angebracht ist, die die Rotationsachse der Spule (14) bildet.

6. Einrichtung nach einem der Ansprüche 1 bis 4, **dadurch gekennzeichnet, dass** die Spule (14) mit der Auswahlachse (3) des Getriebes (2) durch mindestens ein Schaltgestänge (22, 23) verbunden ist, das zum Beispiel Längenregelungsmittel (26) umfasst.

7. Einrichtung nach einem der vorhergehenden Ansprüche, **dadurch gekennzeichnet, dass** die elektrischen Stromversorgungsmittel (9) der Spule (14) einen DC-DC-Wandler umfassen.

8. Einrichtung nach einem der vorhergehenden Ansprüche, **dadurch gekennzeichnet, dass** sie reversibel ist und **dadurch**, dass der Auswahlachse (3) des Getriebes (2) ein Winkelpositionierungsmittel zugeordnet ist, wie ein elastisches Stellelement, das eine Positionierung dieser Achse (3) in irgendeiner von mehreren bestimmten Winkelpositionen gewährleistet.

9. Einrichtung nach einem der vorhergehenden Ansprüche, **dadurch gekennzeichnet, dass** die Permanentmagneten (17, 18) der Betätigungsmittel Neodymeisenbormagneten sind.

10. Einrichtung nach einem der vorhergehenden Ansprüche, **dadurch gekennzeichnet, dass** die Permanentmagneten (17, 18) der Betätigungsmittel Samariumcobaltmagneten sind.
